# EUROPEAN PATENT SPECIFICATION

(11) **EP 3 501 672 B1**
(45) Date of publication and mention of the grant of the patent: **25.11.2020**
(21) Application number: 18211320.9
(22) Date of filing: 10.12.2018
(51) Int. Cl.: B07C 5/36, B65G 54/02

(54) **SYSTEM FOR INSPECTING AND SELECTING OBJECTS**
SYSTEM ZUR INSPEKTION UND AUSWAHL VON OBJEKTEN
SYSTÈME D'INSPECTION ET DE SÉLECTION D'OBJETS

(30) Priority: 22.12.2017 IT 201700149303
(43) Date of publication of application: 26.06.2019
(73) Proprietor: Effegi Service Group S.R.L., 24015 San Giovanni Bianco, Bergamo (IT)
(72) Inventor: SECCHI, Antonio, 24015 San Giovanni Bianco, Bergamo (IT); FUMI, Giovanni, 24015 San Giovanni Bianco, Bergamo (IT)
(74) Representative: Long, Giorgio

(56) References cited:
- DE-A1-102008 051 919
- DE-A1-102014 103 632
- DE-A1-102014 226 965

## Description

The present invention relates to a system for selecting objects, in particular for a system for selecting faulty containers in packaging plants.

As known, industrial packaging lines, in particular in the food and beverage packaging sector, are subject to very high production levels, which can reach tens of thousands of packages per hour, maintaining high product quality levels at the same time. It can be easily understood that the risk of imperfections of the packages is not remote on these production lines operating at very high speed.

In particular, on glass containers filling and packaging lines, faults such as cracks, chipping, air bubbles, dents or opacity are common. Such faults, in addition to having a negative impact on the appearance of the container, may lead to weakening it until it bursts, especially when the bottle is filled with liquid rich in carbon dioxide.

In order to avoid this drawback, visual inspection systems on container lines have been provided, coupled with rejection systems which allow them to be removed from the production line. Such systems generally detect faults using photocells or, the more sophisticated ones, cameras.

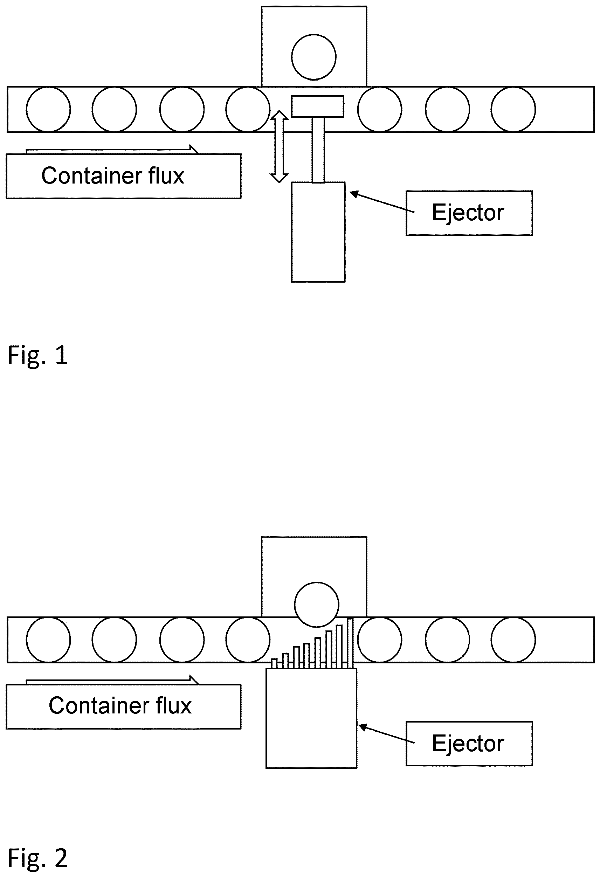

The faulty containers are removed in the known systems by means of single-acting rejections, based on pneumatic cylinder ejectors, or by means of progressive rejections, based on a series of fingers driven at high speed by pneumatic systems. Figures 1 and 2 show the ejection systems of the prior art.

Such faulty container ejection systems thus prevent the containers from remaining in the production process and reaching the consumer but make it extremely difficult to evaluate the problem or problems which caused the fault, because the containers with various faults are collected without being divided. It is therefore almost impossible to track a faulty container from its origin to the packaging site. In this manner, it is therefore difficult to take appropriate measures to prevent the fault from reoccurring.

Although such problem was described in relation to container packaging plants, it is apparent that it may occur on any plant which manages a production line of objects of various nature.

Document DE 10 2014 226 965 A1 discloses a system for inspecting and selecting faulty objects in a production line, but it does non describe or suggest a selecting and removing unit, since the objects are only removed on the outlet conveyor.

In this context, the technical task underlying the present invention is to provide a system for automatically inspecting and selecting faulty objects which solves the aforesaid problems found in the case of the prior art.

The described technical task and the specified objects are substantially achieved by a system for inspecting and selecting faulty objects comprising the described technical features in one or more of the appended claims, the definitions of which form an integral part of the present description.

Further features and advantages of the present invention will be more apparent in the following indicative and consequently non-limiting description of a preferred, but not exclusive embodiment of the invention, as shown in the accompanying drawings, in which:
- figure 1 shows a diagrammatic plan view of a first embodiment of a system for removing faulty objects from a production line according to the prior art;
- figure 2 shows a diagrammatic plan view of a second embodiment of a system for removing faulty objects from a production line according to the prior art;

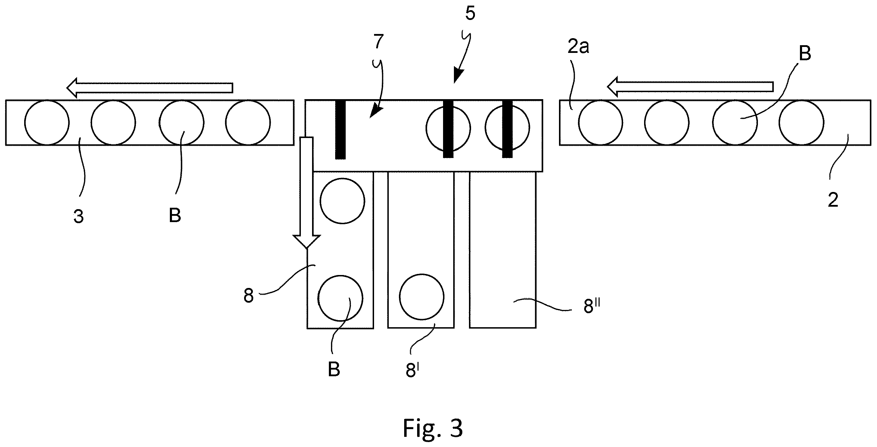

- figure 3 shows a diagrammatic plan view of the system for removing faulty objects from a production line according to the invention;
- figure 4 shows a diagrammatic plan view of the system for removing faulty objects from a production line according to a different embodiment of the invention;
- figure 5 shows a simplified perspective view of the system for removing faulty objects in figure 4;
- figure 6 shows a different simplified perspective view of the system for removing faulty objects in figure 4;
- figure 7 shows a diagrammatic block chart of the system for inspecting and removing faulty items from a production line according to the invention.

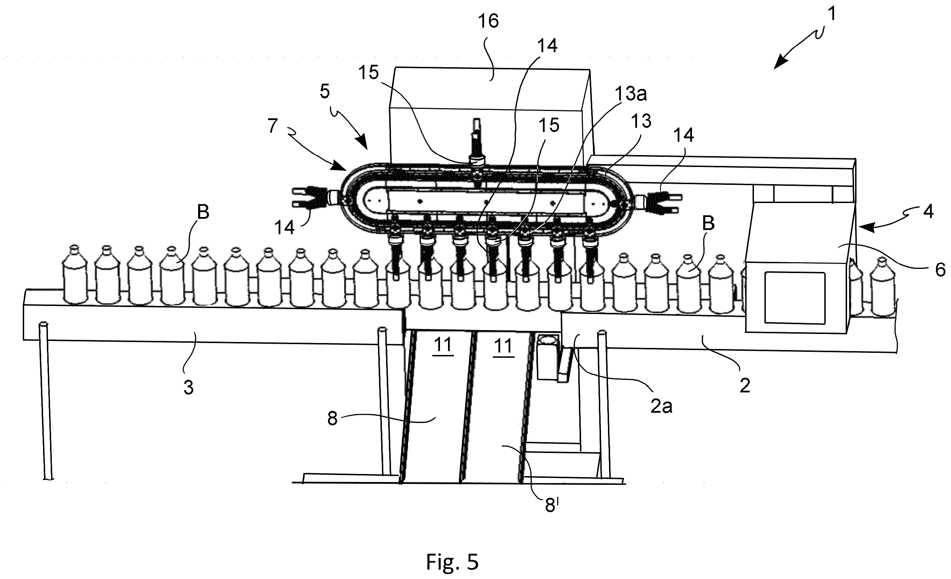

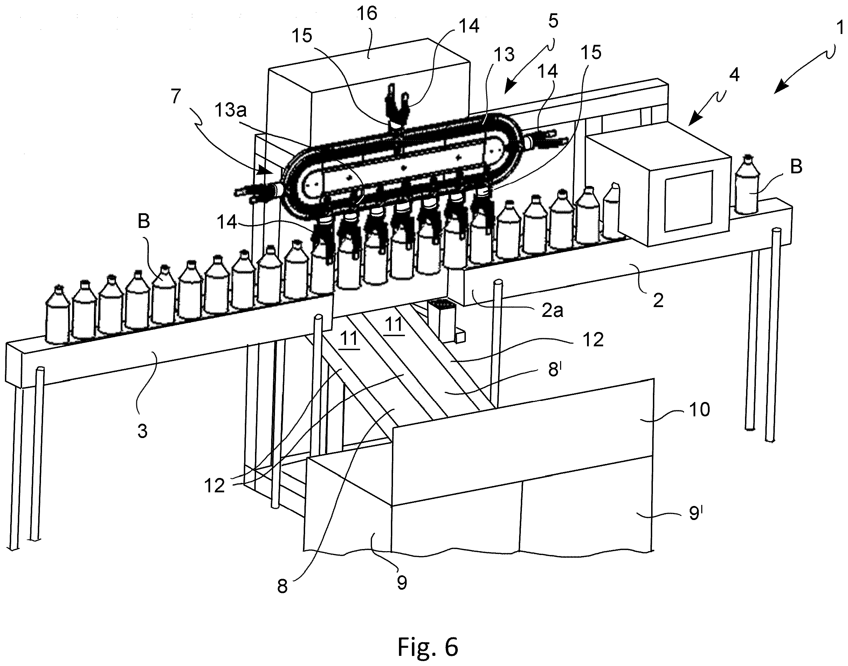

With reference to the figures, the inspecting and selecting system according to the present invention, indicated as a whole by reference number 1 (figures 5 and 6), comprises an inlet conveyor 2, an outlet conveyor 3, an inspection unit 4 and a selecting and removing unit 5.

The inlet conveyor 2 may be a linear conveyor belt or any other type of conveying system configured to convey a plurality of objects (the containers B, in the example of the figures) in sequence and launch them towards the selecting and removing unit 5.

The outlet conveyor 3 may be, in turn, a linear conveyor belt or any other type of conveying system configured to convey a plurality of objects (the containers B, in the example in the figures) in sequence after having picked them from the selecting and removing unit 5.

The inlet conveyor 2 and the outlet conveyor 3 are aligned along a path of the objects, typically a rectilinear path, and are separated by a space in which the selecting and removing unit 5 is arranged, the selecting and removing unit 5 being configured so as to constitute a transport joining section of the objects between the two conveyors 2, 3.

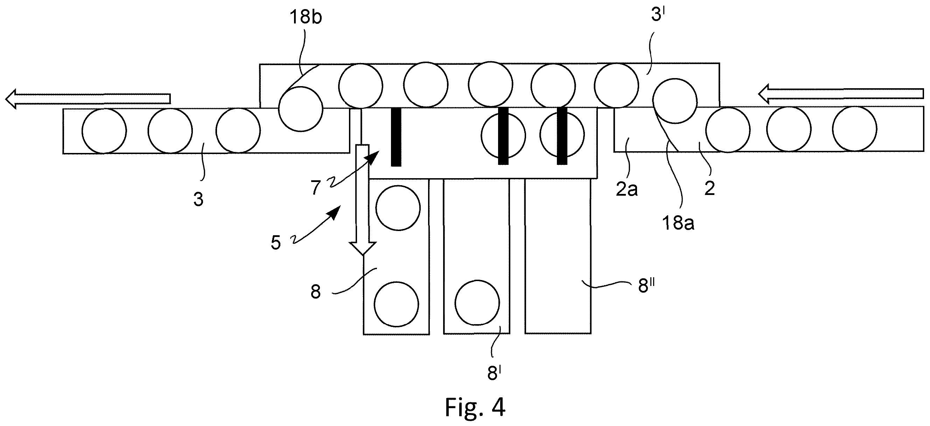

In a different embodiment, shown in figure 4, the system of the invention comprises an intermediate conveyor 3', arranged in a position adjacent to the selecting and removing unit 5, between the inlet conveyor 2 and the outlet conveyor 3. In such a case, the inlet conveyor 2, at the release end 2a, comprises a re-directing border 18a, while the intermediate conveyor 3' comprises a re-directing border 18b, said re-directing borders 18a, 18b being movable or removable and configured so as to deviate the objects in transit from the inlet conveyor 2 onto the intermediate conveyor 3' and from here onto the outlet conveyor 3. The intermediate conveyor 3' can be made in a similar manner to other conveyors 2, 3.

In this manner, as shown in figure 4, it is possible to bypass the selecting and removing unit 5, in case of malfunctions or during maintenance or for any other need.

The inspection unit 4 is arranged at the inlet conveyor 2, at a given distance from a release end 2a thereof, and comprises sensors or a viewing system, e.g. a camera system. Such viewing systems are known in themselves. An example of such viewing systems is the one described in EP-A-2462029 by Sidel S.p.A.

The viewing system comprises a camera 6 in which means for illuminating and backlighting the objects in transit and a camera system, e.g. a system with four cameras, arranged at the vertices of a square, at the intersection of whose diagonals the object to be inspected transits, are provided. The viewing system is configured so as to detect various types of faults in various portions of the object on the objects in transit. For example, in the case of containers B made of glass or other rigid material, the viewing system can detect cracks, chippings, air bubbles, dents, opacity in various zones of the container, e.g. the bottom, side surface and/or the neck.

The selecting and removing unit 5 of faulty objects comprises a handling device 7 of the objects and removal means 8, 8', 8" of the faulty objects. In the figures, such removal means are exemplified as slides, but it is apparent that other removal means may be used, such as conveyor belts or the like, or the faulty objects may be dropped directly into collectors placed under the handling device 7. Hereinafter, the removal means 8, 8', 8" will be described in their form of slides for the sake of simplicity.

The handling device 7 is arranged along the path of the objects, aligned with the inlet conveyor 2 and with the outlet conveyor 3, so as to provide a transport joining section of the objects between the two conveyors 2, 3.

The removal slides 8, 8', 8" are put side by side and are arranged transversely with respect to the path of the objects, so that the upper end 11 is underneath the handling device 7.

In some embodiments, recovery containers 9, 9' may be provided at the end of the removal slides 8, 8', so as to collect the faulty objects, after they have been selected by means of the system of the invention. The recovery containers 9, 9' may comprise a border 10 at least on the side opposite to the slide 8, 8', so as to prevent the faulty object from overshooting the container 9, 9' by inertia of movement.

The slides 8, 8', 8" can also comprise side borders 12, so as to channel the removed objects and prevent them from escaping sideways.

The objects handling device 7 comprises a guiding track 13 on which a plurality of grippers 14 slide, said grippers 14 being movable independently and with independent movement.

The guiding track 13 may have various shapes, but will include at least a horizontal section 13a, aligned with the path of the objects and placed above it. Preferably, the guiding track 13 has the shape of a circuit. For example, the guiding track 13 will have flattened oval shape, as shown in the figures.

The grippers 14 are configured so as to grip the objects at their upper portion. In some embodiments, the grippers 14 grasp objects from above, whereby applying a sealing pressure on their body.

The grippers 14 are controlled electrically, pneumatically or magnetically by means of actuators, so as to open or close according to an opening/closing control.

In a preferred embodiment, each of the grippers 14 is mounted onto an independent trolley 15, which moves along the guiding track 13 with independent speed, acceleration and control of the position with respect to the other trolleys 15.

In particularly preferred embodiments, the trolleys 15 are provided with magnets and the guiding track 13, in turn, is provided with electromagnets, so as to create a magnetic guiding system. Movement systems of this type are known in themselves and commercially available, e.g. those marketed by Beckhoff Automation or by B&R Automation.

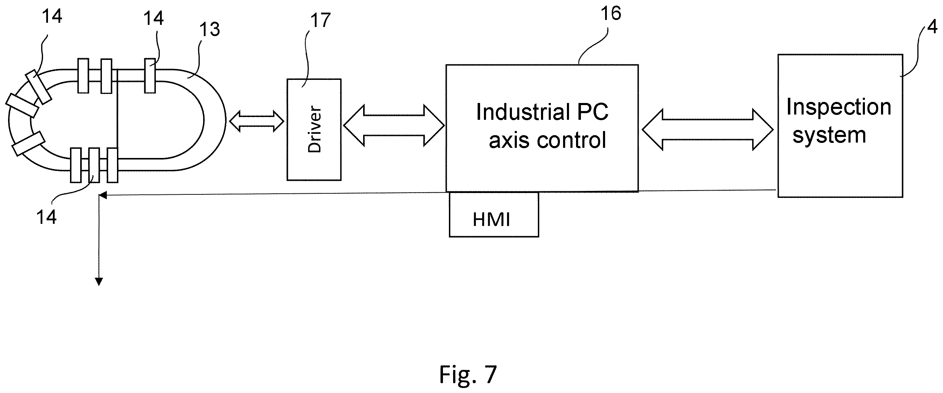

As shown in figure 7, the inspection and selecting system 1 of faulty objects comprises a command and control unit 16 to which both the inspection unit 4 and the drivers 17, which command the movement of the trolleys 15 on which the grippers 14 are mounted, as well as the actuators for opening/closing the grippers 14, are operatively connected. The command and control unit 16 interfaces with the user by means of an HMI ("Human Machine Interface") system.

In some embodiments, the conveyors 2, 3 are connected to encoders, integral with the drive shafts of the motors for driving the conveyors themselves. The encoders are operatively connected in real time by the command and control unit 16. This allows a good synchronization between fault detecting system and the rejecting/selecting system.

The inspecting and selecting system 1 works in the following manner.

The objects transiting along the inlet conveyor 2 pass through the inspecting unit 4, then, at the release end 2a of the conveyor 2, are each picked by a gripper 14, which carries them to the outlet conveyor 3, which moves the objects towards a subsequent processing operation.

When a faulty item transits through the inspecting unit 4, the latter detects the fault and transmits the data to the command and control unit 16, which classifies the fault on the basis of a predetermined classification order. For example, faults may be classified according to the position of the fault (bottom or side surface or upper portion/neck of the object), or according to type of fault (cracks, chips, air bubbles, opacity of the container or the content, dents), or according to position or type of fault and a sub-classification, respectively by type or location of the fault.

Faults may be detected by means of known systems, e.g. those described in JP-A-2003057190 or JP-A-2000019130.

In general, the data on the faulty object (e.g. images captured by the cameras) are processed by the command and control unit 16, in order to:
i) compare the data or images received from the inspection unit 4 with predefined data or images of reference, so as to detect a fault in an object (B) in transit;
ii) classify the type of fault detected based on the comparison of the passage i), and/or
iii) classify the position of the fault detected based on the comparison of the passage i);
iv) send the drivers 17 a movement command of the trolley 15 corresponding to the gripper 14 carrying the faulty object and a release command of the faulty object by the gripper 14, wherein the release command is preset so that the release occurs above the slide 8, 8', 8" corresponding to the type and/or position of the fault detected according to the classification of the passages ii) and iii) ;
v) send the drivers 17 a movement command of the trolleys 15 corresponding to the grippers 14 carrying non-faulty objects and a release command of said non-faulty objects by the respective grippers 14, wherein the release command is preset so that the release occurs above the outlet conveyor 3.

The system 1 for inspecting and selecting faulty objects according to the invention therefore achieves the set aims by allowing a classification and selective recovery of faulty objects according to the type and/or position of the fault so as to be able to perform statistical studies on faults and accurate assessments on possible causes and on possible measures to avoid them.

It is apparent that only some particular embodiments of the present invention have been described, to which a person skilled in the art will be able to make all the changes necessary to adapt it to particular applications, without because of this departing from the scope of protection of the present invention, as defined in the claims.

## Claims

1. A system for inspecting and selecting (1) faulty objects in a production line and/or for packing said objects (B), comprising an inlet conveyor (2), an outlet conveyor (3), an inspection unit (4) and a selecting and removing unit (5) of the faulty objects, wherein the inlet (2) and outlet (3) conveyors are aligned along a path of the objects and separated by a space, in which the selecting and removing unit (5) is arranged, the selecting and removing unit (5) being configured, so as to constitute a joining section of the transport of the objects (B) between the two conveyors (2, 3), wherein the selecting and removing unit (5) of the faulty objects comprises a handling device (7) of the objects (B) comprising a plurality of grippers (14) configured to handle said objects (B).

2. The system (1) according to claim 1, wherein the inspection unit (4) is arranged in correspondence with the inlet conveyor (2), at a given distance from a release end (2a) of said inlet conveyor (2), and comprises sensors or a viewing system, preferably a camera system.

3. The system (1) according to claim 2, wherein the viewing system comprises a camera (6), in which lighting and backlighting means are positioned for the objects (B) in transit, and a camera system, preferably a system with four cameras, arranged at the vertices of a square, at the intersection of whose diagonals the object (B) to be inspected transits, and wherein the viewing system is configured, so as to detect, in the objects (B) in transit, different types of defects in different portions of the object.

4. The system (1) according to any one of the claims from 1 to 3, wherein the selecting and removing unit (5) comprises means for removing (8, 8', 8") the faulty objects, said removal means (8, 8', 8") preferably being slides put side by side and arranged transversely with respect to the path of the objects, and comprising an upper end (11) and a lower end, so that the upper end (11) of the slides (8, 8', 8") is positioned below the handling device (7).

5. The system (1) according to claim 4, wherein, at the end of the removal means (8, 8'), recovery containers (9, 9') are arranged, the recovery containers (9, 9') preferably comprising a border (10) at least on the side opposite to the removal means (8, 8') and/or side borders (12).

6. The system (1) according to any one of the claims from 1 to 5, wherein the handling device (7) of the objects (B) comprises a guiding track (13), whereupon said grippers (14) slide independently and with independent movement.

7. The system (1) according to claim 6, wherein the guiding track (13) comprises at least one horizontal section (13a), aligned with the path of the objects and positioned above it, the guiding track (13) preferably having the form of a circuit.

8. The system (1) according to claim 6 or 7, wherein each of the grippers (14) is mounted onto an independent trolley (15), which moves along the guiding track (13) with independent speed, acceleration and control of the position with respect to the other trolleys (15).

9. The system (1) according to claim 8, wherein the trolleys (15) are provided with magnets and the guiding track (13), in turn, is provided with electromagnets, so as to create a magnetic guiding system.

10. The system (1) according to any one of the claims from 1 to 9, wherein the grippers (14) are commanded electrically, pneumatically or magnetically by means of actuators, so as to open or close according to an opening/closing command.

11. The system (1) according to any one of the claims from 1 to 10, comprising an intermediate conveyor (3'), arranged in a position adjacent to the selecting and removing unit (5), between the inlet conveyor (2) and the outlet conveyor (3), wherein the inlet conveyor (2), in correspondence with the release end (2a), comprises a re-directing border (18a), and the intermediate conveyor (3') comprises a re-directing border (18b), said re-directing borders (18a, 18b) being movable or removable and configured, so as to deviate the objects (B) in transit from the inlet conveyor (2) on the intermediate conveyor (3') and from the intermediate conveyor (3') on the outlet conveyor (3) .

12. The system (1) according to any one of the claims from 1 to 11, comprising a command and control unit (16) to which the inspection unit (4) and the drivers (17), which command the movement of the trolleys (15) on which the grippers (14) are mounted, and the actuators for opening/closing the grippers (14) are operatively connected.

13. The system (1) according to claim 12, wherein the command and control unit (16) is configured so as to:
i) compare the data or images received from the inspection unit (4) with predefined data or images of reference, so as to detect a fault in an object (B) in transit;
ii) classify the type of fault detected based on the comparison of the passage i), and/or
iii) classify the position of the fault detected based on the comparison of the passage i);
iv) send the drivers (17) a movement command of the trolley (15) corresponding to the gripper (14) carrying the faulty object and a release command of the faulty object by the gripper (14), wherein the release command is preset so that the release occurs above the slide (8, 8', 8") corresponding to the type and/or position of the fault detected according to the classification of the passages ii) and iii);
v) send the drivers (17) a movement command of the trolleys (15) corresponding to the grippers (14) carrying non-faulty objects and a release command of said non-faulty objects by the respective grippers (14), wherein the release command is preset so that the release occurs above the outlet conveyor (3).

## Patentansprüche

1. System zum Inspizieren und Auswählen (1) von fehlerhaften Objekten in einer Produktionslinie und/oder zum Verpacken der Objekte (B), umfassend eine Einlass-Fördereinheit (2), eine Auslass-Fördereinheit (3), eine Inspektion-Einheit (4) und eine Auswahl- und Entfernung-Einheit (5) der fehlerhaften Objekte, wobei die Einlass- (2) und die Auslass- (3) Fördereinheit entlang eines Pfades der Objekte ausgerichtet sind und um einen Raum beabstandet sind, in welchem die Auswahl- und Entfernung-Einheit (5) angeordnet ist, wobei die Auswahl- und Entfernung-Einheit (5) dazu eingerichtet ist, einen Verbindung-Abschnitt des Transports der Objekte (B) zwischen den beiden Fördereinheit (2, 3) zu bilden, wobei die Auswahl- und Entfernung-Einheit (5) der fehlerhaften Objekte eine Abfertigung-Vorrichtung (7) der Objekte (B) umfasst, welche eine Mehrzahl von Greifern (14) umfasst, welche dazu eingerichtet sind, die Objekte (B) abzufertigen.

2. System (1) nach Anspruch 1, wobei die Inspektion-Einheit (4) im Einklang mit der Einlass-Fördereinheit (2) in einer gegebenen Distanz von einem Freigabe-Ende (2a) der Einlass-Fördereinheit (2) angeordnet ist und Sensoren oder ein Betrachtung-System, vorzugsweise ein Kamera-System, umfasst.

3. System (1) nach Anspruch 2, wobei das Betrachtung-System eine Kamera (6), in welcher Beleuchtung- und Hintergrundlicht-Mittel für die Objekte (B) in Bewegung positioniert sind, und ein Kamera-System, vorzugsweise ein System mit vier Kameras, umfasst, welches an den Eckpunkten eines Quadrates angeordnet ist, wobei sich an dem Schnittpunkt von Diagonalen davon das zu inspizierende Objekt (B) bewegt, und wobei das Betrachtung-System dazu eingerichtet ist, in den Objekten (B) in Bewegung verschiedene Typen von Defekten in verschiedenen Abschnitten des Objekts zu detektieren.

4. System (1) nach einem der Ansprüche 1 bis 3, wobei die Auswahl- und Entfernung-Einheit (5) Mittel zum Entfernen (8, 8', 8") der fehlerhaften Objekte umfasst, wobei die Entfernung-Mittel (8, 8', 8") vorzugsweise Seite an Seite gesetzte Schieber sind und transversal in Bezug auf den Pfad der Objekte angeordnet sind, und ein oberes Ende (11) und ein unteres Ende umfassen, so dass das obere Ende (11) der Schieber (8, 8', 8") unter der Abfertigung-Vorrichtung (7) positioniert ist.

5. System (1) nach Anspruch 4, wobei an dem Ende der Entfernung-Mittel (8, 8') Wiedergewinnung-Behälter (9, 9') angeordnet sind, wobei die Wiedergewinnung-Behälter (9, 9') vorzugsweise eine Grenze (10) wenigstens an der Seite den Entfernung-Mitteln (8, 8') entgegengesetzt und/oder Seiten-Grenzen (12) umfassen.

6. System (1) nach einem der Ansprüche 1 bis 5, wobei die Abfertigung-Vorrichtung (7) der Objekte (B) eine Führung-Bahn (13) umfasst, auf welcher die Greifer (14) unabhängig und mit einer unabhängigen Bewegung gleiten.

7. System (1) nach Anspruch 6, wobei die Führung-Bahn (13) wenigstens einen horizontalen Abschnitt (13a) umfasst, welcher mit dem Pfad der Objekte ausgerichtet ist und über diesem positioniert ist, wobei die Führung-Bahn (13) vorzugsweise die Form einer geschlossenen Bahn aufweist.

8. System (1) nach Anspruch 6 oder 7, wobei jeder der Greifer (14) an einem unabhängigen Wagen (15) angebracht ist, welcher sich entlang der Führung-Bahn (13) mit einer unabhängigen Geschwindigkeit, Beschleunigung und Steuerung der Position in Bezug auf die anderen Wägen (15) bewegt.

9. System (1) nach Anspruch 8, wobei die Wägen (15) mit Magneten bereitgestellt sind und die Führung-Bahn (13) wiederum mit Elektromagneten bereitgestellt ist, um ein magnetisches Führung-System zu erzeugen.

10. System (1) nach einem der Ansprüche 1 bis 9, wobei die Greifer (14) elektrisch, pneumatisch oder magnetisch mittels Aktuatoren befehligt werden, um sich gemäß einem Öffnung-/Schließ-Befehl zu öffnen oder zu schließen.

11. System (1) nach einem der Ansprüche 1 bis 10, umfassend eine Zwischen-Fördereinheit (3'), welche in einer Position, der Auswahl- und Entfernung-Einheit (5) benachbart, zwischen der Einlass-Fördereinheit (2) und der Auslass-Fördereinheit (3) angeordnet ist, wobei die Einlass-Fördereinheit (2) im Einklang mit dem Freigabe-Ende (2a) eine Umleitung-Grenze (18a) umfasst, und wobei die Zwischen-Fördereinheit (3') eine Umleitung-Grenze (18b) umfasst, wobei die Umleitung-Grenzen (18a, 18b) bewegbar oder entfernbar sind und dazu eingerichtet sind, die Objekte (B) in Bewegung von der Einlass-Fördereinheit (2) an der Zwischen-Fördereinheit (3') und von der Zwischen-Fördereinheit (3') an der Auslass-Fördereinheit (3) abzulenken.

12. System (1) nach einem der Ansprüche 1 bis 11, umfassend eine Befehl- und Steuer-Einheit (16), mit welcher die Inspektion-Einheit (4) und die Treiber (17), welche die Bewegung der Wägen (15) befehligen, an welchen die Greifer (14) angebracht sind, und die Aktuatoren zum Öffnen/Schließen der Greifer (14) betriebsmäßig verbunden sind.

13. System (1) nach Anspruch 12, wobei die Befehl- und Steuer-Einheit (16) dazu eingerichtet ist:
i) die Daten oder Bilder, welche von der Inspektion-Einheit (4) empfangen worden sind, mit vordefinierten Daten oder Bildern einer Referenz zu vergleichen, um einen Fehler in einem Objekt (B) in Bewegung zu detektieren;
ii) den Typ eines Fehlers zu klassifizieren, welcher auf Grundlage des Vergleichs des Durchlaufs i) detektiert worden ist, und/oder
iii) die Position des Fehlers zu klassifizieren, welcher auf Grundlage des Vergleichs des Durchlaufs i) detektiert worden ist;
iv) an die Treiber (17) einen Bewegung-Befehl des Wagens (15), welcher dem Greifer (14) entspricht, welcher das fehlerhafte Objekt trägt, und einen Freigabe-Befehl des fehlerhaften Objekts durch den Greifer (14) zu senden, wobei der Freigabe-Befehl derart vorhanden ist, dass die Freigabe über dem Schieber (8, 8', 8") auftritt, welcher dem Typ und/oder der Position des Fehlers entspricht, welcher gemäß der Klassifikation der Durchläufe ii) und iii) detektiert worden ist;
v) an die Treiber (17) einen Bewegung-Befehl der Wägen (15), welche den Greifern (14) entsprechen, welche nicht-fehlerhafte Objekte tragen, und einen Freigabe-Befehl der nicht-fehlerhaften Objekte durch die jeweiligen Greifer (14) zu senden, wobei der Freigabe-Befehl derart vorhanden ist, dass die Freigabe über der Auslass-Fördereinheit (3) auftritt.

## Revendications

1. Système (1) d'inspection et de sélection d'objets défectueux dans une ligne de production et/ou d'emballage de ces objets (B), comprenant un convoyeur d'entrée (2), un convoyeur de sortie (3), une unité d'inspection (4) et une unité de sélection et d'enlèvement (5) des objets défectueux, les convoyeurs d'entrée (2) et de sortie (3) étant alignés le long d'un chemin des objets et séparées par un espace dans lequel l'unité de sélection et d'enlèvement (5) est disposée, l'unité de sélection et d'enlèvement (5) étant configurée de façon à constituer une section de liaison pour le transport des objets (B) entre les deux convoyeurs (2, 3), l'unité de sélection et d'enlèvement (5) des objets défectueux comprenant un dispositif de manipulation (7) des objets (B) comportant une pluralité de préhenseurs (14) configurés pour manipuler les objets (B).

2. Système (1) selon la revendication 1, **caractérisé en ce que** l'unité d'inspection (4) est disposée par rapport au convoyeur d'entrée (2) à une distance donnée de l'extrémité de sortie (2a) du convoyeur d'entrée (2) et comprend des capteurs ou un système de vision, de préférence un système de caméras.

3. Système (1) selon la revendication 2, **caractérisé en ce que** le système de vision comprend une caméra (6) dans laquelle des moyens d'éclairage et d'éclairage par l'arrière sont positionnés pour les objets (B) en transit, et un système de caméras, de préférence avec quatre caméras agencées à la verticale des quatre coins d'un carré, au croisement des diagonales duquel l'objet (B) à inspecter passe, et **en ce que** le système de vision est configuré de façon à détecter, dans les objets (B) en transit, différents types de défaut dans différentes parties de l'objet.

4. Système (1) selon l'une quelconque des revendications 1 à 3, **caractérisé en ce que** l'unité de sélection et d'enlèvement (5) comprend des moyens pour enlever (8, 8', 8") les objets défectueux, les moyens d'enlèvement (8, 8', 8") étant de préférence des glissières situées les unes à côté des autres et agencées transversalement par rapport au chemin des objets et comprenant une extrémité supérieure (11) et une extrémité inférieure de façon que l'extrémité supérieure (11) des glissières (8, 8', 8") soit positionnée en-dessous du dispositif de manipulation (7).

5. Système (1) selon la revendication 4, **caractérisé en ce que**, à l'extrémité des moyens d'enlèvement (8, 8'), des conteneurs de récupération (9, 9') sont agencés, les conteneurs de récupération (9, 9') comprenant de préférence une bordure (10) au moins sur le côté opposé aux moyens d'enlèvement (8, 8') et/ou des bordures latérales (12).

6. Système (1) selon l'une quelconque des revendications 1 à 5, **caractérisé en ce que** le dispositif (7) de manipulation des objets (B) comprend un rail de guidage (13) sur lequel les préhenseurs (14) glissent indépendamment et avec un mouvement indépendant.

7. Système (1) selon la revendication 6, **caractérisé en ce que** le rail de guidage (13) comprend au moins une partie horizontale (13a) alignée sur le chemin des objets et positionné au-dessus de celui-ci, le rail de guidage (13) ayant de préférence la forme d'un circuit.

8. Système (1) selon la revendication 6 ou 7, **caractérisé en ce que** chacun des préhenseurs (14) est monté sur un chariot (15) indépendant qui se déplace le long du rail de guidage (13) à vitesse et accélération indépendantes et commande indépendante de la position par rapport aux autres chariots (15).

9. Système (1) selon la revendication 8, **caractérisé en ce que** les chariots (15) sont pourvus d'aimants et que le rail de guidage (16), de sa part, est pourvu d'électro-aimants afin de créer un système de guidage magnétique.

10. Système (1) selon l'une quelconque des revendications 1 à 9, **caractérisé en ce que** les préhenseurs (14) sont commandés électriquement, pneumatiquement ou magnétiquement à l'aide d'actionneurs afin de s'ouvrir ou de se fermer selon une commande ouvrir/fermer.

11. Système (1) selon l'une quelconque des revendications 1 à 10, comprenant un convoyeur intermédiaire (3') agencé dans une position adjacente à l'unité de sélection et d'enlèvement (5), entre le convoyeur d'entrée (2) et le convoyeur de sortie (3), **caractérisé en ce que** le convoyeur d'entrée (2) comprend, de façon à correspondre à l'extrémité de sortie (2a), une bordure de redirection (18a) et que le convoyeur intermédiaire (3') comprend une bordure de redirection (18b), les bordures de redirection (18a, 18b) étant mobiles ou pouvant être enlevées et étant configurées de façon à dévier les objets (B) en transit du convoyeur d'entrée (2) sur le convoyeur intermédiaire (3') et du convoyeur intermédiaire (3') au convoyeur de sortie (3).

12. Système (1) selon l'une quelconque des revendications 1 à 11, comprenant une unité de commande et de régulation (16) à laquelle sont reliés fonctionnellement l'unité d'inspection (4) et les commandes (17), qui commandent le mouvement des chariots (15) sur lesquels les préhenseurs (14) sont montés, et les actionneurs pour ouvrir/fermer les préhenseurs (14).

13. Système (1) selon la revendication 12, **caractérisé en ce que** l'unité de commande et de régulation (16) est configurée de façon à :
i) comparer les données ou images reçues de l'unité d'inspection (4) aux données prédéfinies ou images de référence afin de détecter un défaut dans un objet (B) en transit ;
ii) classifier le type de défaut détecté sur la base de la comparaison de l'étape i), et/ou
iii) classifier la position du défaut détecté sur la base de la comparaison de l'étape i) ;
iv) envoyer aux commandes (17) une commande de mouvement du chariot (15) correspondant au préhenseur (14) portant l'objet défectueux et une commande de libérer l'objet défectueux par la préhenseur (14), la commande de libération étant préréglée si bien que la libération se fasse au-dessus de la glissière (8, 8', 8") correspondant au type et/ou à la position du défaut détecté selon la classification des étapes ii) et iii) ;
v) envoyer aux commandes (17) une commande de mouvement des chariots (15) correspondant aux préhenseurs (14) portant des objets non-défectueux et une commande de libérer les objets non-défectueux par les préhenseurs respectifs (14), la commande de libération étant préréglée si bien que la libération se fasse au-dessus du convoyeur de sortie (3).
